# EUROPÄISCHE PATENTSCHRIFT

(11) **EP 2 570 157 B1**
(45) Veröffentlichungstag und Bekanntmachung des Hinweises auf die Patenterteilung: **11.04.2018**
(21) Anmeldenummer: 12182111.0
(22) Anmeldetag: 29.08.2012
(51) Int. Cl.: A62C 2/06, F16L 5/04, H02G 3/04

(54) **Brandschutzelement**
Fire retardant element
Elément ignifuge

(30) Priorität: 19.09.2011 DE 102011082911
(43) Veröffentlichungstag der Anmeldung: 20.03.2013
(73) Patentinhaber: HILTI Aktiengesellschaft, 9494 Schaan (LI)
(72) Erfinder: Klein, Manfred, 86916 Kaufering (DE); Münzenberger, Herbert, 65191 Wiesbaden (DE)
(74) Vertreter: Hilti Aktiengesellschaft Corporate Intellectual Property

(56) Entgegenhaltungen:
- WO-A1-2004/096369
- GB-A- 2 203 900
- US-A- 4 249 353
- US-A- 4 889 298
- US-B1- 6 862 852
- US-B2- 6 732 481

## Beschreibung

Die Erfindung betrifft ein Brandschutzelement zur feuerhemmenden Abdichtung von Kabel- und/oder Rohrdurchführungen.

Derartige Brandschutzelemente dienen insbesondere der nachträglichen Belegung mittels Leitungen, wie Kabel oder Kabelstränge und Rohre, durch ein Bauteil, wie Decken, Wände oder Böden eines Gebäudes.

Um in einem Brandfall das Übergreifen von Feuer von einem Raum in einen anderen Raum durch die im Bauteil angeordnete Vorrichtung hindurch zu verhindern, ist beispielsweise aus der DE 103 26 775 A1 eine Vorrichtung mit einem Gehäuse bekannt, in dem ein unteres Intumeszenzkissen und mehrere benachbart zueinander angeordnete, obere Intumeszenzkissen-Streifen angeordnet sind. Die oberen Intumeszenzkissen-Streifen weisen jeweils einen flexiblen, sich bis zum unteren Intumeszenzkissen erstreckenden Abschnitt auf. Bei einer nachträglichen Belegung der Vorrichtung werden je nach Breite und Position der hindurchgeführten Leitungen die flexiblen Abschnitte angehoben. Im Brandfall steigt die Umgebungstemperatur massgeblich an, worauf das intumeszierende Material expandiert und die Durchführöffnung der Vorrichtung verschlossen wird.

Nachteilig an der bekannten Lösung ist, dass beispielsweise bei einer Belegung der Vorrichtung mit mehreren Leitungen, insbesondere wenn diese unterschiedliche Aussendurchmesser aufweisen, bis zur Expansion des intumeszierenden Materials im Brandfall Rauchgas durch die Vorrichtung hindurch in benachbarte Räume eindringen kann. Insbesondere wird der Durchtritt von Kaltrauch, dessen Temperatur im Wesentlichen der üblichen Umgebungstemperatur entspricht, durch die bekannte Vorrichtung hindurch nicht verhindert.

Aus der GB 2 324 587 A ist eine Vorrichtung zur Aufnahme einer Leitung in einer Durchführung eines Bauteils mit einem mantelförmigen Gehäuse, mit einer zweiteiligen Dichteinlage aus einem elastisch deformierbaren Material und mit einem Aufnahmeraum für die Leitung bekannt. Das Gehäuse umfasst zwei Halbschalen in denen jeweils ein Teil der Dichteinlage als Halbschale angeordnet ist. Im zusammengefügten Zustand der Vorrichtung umschliesst die elastisch deformierbare Dichteinlage die in dem Aufnahmeraum aufgenommene beziehungsweise durch das Bauteil hindurchgeführte Leitung vollständig und schottet die Durchführung rauchgasdicht ab.

Nachteilig an der bekannten Lösung ist, dass bei Gewährleistung der Rauchgasdichtigkeit nur eine Leitung mit einem bestimmten Durchmesser durch die Vorrichtung hindurchführbar ist. Des Weiteren ist eine nachträgliche Belegung der im Bauteil angeordneten Vorrichtung mit weiteren Leitungen nicht möglich.

Aus der DE 10 2004 056 914 A1 ist ein formstabiles verformbares Brandschutzelement aus einem intumeszierenden Schaumstoff zur Hitze- und/oder feuerhemmenden Abdichtung einer Rohr- und/oder Kabeldurchführung bekannt, das länglich, bevorzugt zylindrisch oder balkenförmig, ausgebildet ist, wobei das Brandschutzelement quer zum Rohr und/oder Kabel in der Rohr- und/oder der Kabeldurchführung verlegt wird.

Nachteilig an dieser bekannten Lösung ist, dass Freiräume zwischen der Durchführung und dem Brandschutzelement verbleiben, durch die Rauchgase dringen können, bevor das Brandschutzelement durch Intumeszenz diese Freiräume verschließt. Um dies zu vermeiden, müssen die Freiräume mit einer Dichtmasse verschlossen werden, was zusätzliches Material und einen weiteren Arbeitvorgang erforderlich macht.

Aus der DE 19914371 C1 sind Brandschutzmauersteine bekannt, welche die Form und die Maße eines Ziegelsteines aufweisen und zur Abschottung größerer Leitungsdurchführungen dienen.

US 4,249,353 A beschreibt ein Brandschutzelement, welches elastisch und intumeszierend ist und welches aus zwei einander zugewandten Platten mit strukturierter Oberfläche besteht. Diese Oberflächen sind nicht komplementär zueinander, denn die Durchführungsöffnungen sind vorbestimmt.

Nachteilig hieran ist, dass zum brandsicheren Abdichten von Leitungen die Kontur des durchgeführten Elementes passgenau auf den entsprechenden Brandschutzstein übertragen werden muss. Diese Arbeit ist, abhängig von Form und Anzahl der durchzuführenden Elemente, entsprechend aufwändig. Ein Nachteil entsteht ferner bei der Installation der letzten Steinreihe. Häufig muss hierzu ein Stein in der Höhe angepasst oder zurechtgeschnitten werden. Das Einschieben gestaltet sich oft schwierig, da zum einen der Stein mit seinen Flanken meistens anliegt und zum anderen der Stein aus einem polymeren Kunststoff besteht, da dass sich ein entsprechender Reibungswiderstand ergibt.
Ein Nachteil bei den bekannten Brandschutzelementen, die zur Abschottung von Leitungsdurchführungen verwendet werden, entsteht ferner bei der Brandprüfung von stark wärmeleitenden Leitungen. Hier reicht teilweise die Isolierung und/oder die Wärmeabfuhr des Brandschutzelements alleine nicht aus und es müssen zusätzliche Maßnahmen zur Isolation ergriffen werden. Üblicherweise erfolgt die zusätzliche Isolierung mittels einer Brandschutzmatte, die um das entsprechende Element gelegt wird. Diese Matte ist aus einem anderen Material als das Brandschutzelement gefertigt. Zudem ist eine einseitige Installation, insbesondere an schwer zugänglichen Stellen fast nicht möglich.
Aufgabe der Erfindung ist es, ein Brandschutzelement zur Aufnahme zumindest einer Leitung in einer Durchführung eines Bauteils zu schaffen, das die genannten Nachteile vermeidet, das insbesondere eine rauchgas- und feuerdichte Abschottung der Durchführung auch bei mehreren hindurchgeführten Leitungen erlaubt.
Die Lösung der Aufgabe erfolgt dadurch, dass ein Brandschutzelement mit wenigstens einem flächigen Formkörper bereitgestellt wird, wobei wenigstens eine Oberfläche des flächigen Formkörpers, der aus einem elastisch deformierbaren Material, das zumindest teilweise aus einem aschebildenden und gegebenenfalls intumeszierenden Stoffgemisch besteht, wobei wenigstens eine Oberfläche des Formkörpers strukturiert ist, wobei die Oberfläche mit Erhebungen und Vertiefungen versehen ist, und wobei das Brandschutzelement zwei flächige Formkörper umfasst deren Oberflächen einander zugewandt sind, und dadurch gekennzeichnet ist, dass die strukturierten Oberflächen der beiden flächigen Formkörper zueinander komplementär sind.

*"Flächig"* im Sinne der Erfindung bedeutet, dass der Formkörper in seiner Ebene größere Abmasse aufweist als seine Dicke.

*"Elastisches deformierbares Material"* im Sinne der Erfindung bedeutet, dass das Material so flexibel ist, dass es etwa um eine Leitung, wie ein Rohr oder Kabel, herum gelegt werden kann, ohne dass es Risse bildet oder bricht; ferner nimmt das Material seine ursprüngliche Form wieder an, wenn es beispielsweise durch zusammendrücken verbiegen oder verdrehen deformiert wurde.

Der Begriff "*Leitung"* bzw. "*Leitungselement"* wird in der vorliegenden Beschreibung als Oberbegriff für Kabel einschließlich Kabelbündel und Rohre einschließlich Rohrbündel verwendet.

Durch die strukturierte Oberfläche kann das Brandschutzelement auf eine Leitung aufgelegt werden und dichtet beim Anpressen die Leitung ausreichend ab, ohne dass die Kontur der Leitung vorher aus dem Brandschutzelement herausgeschnitten werden muss. Die elastische und deformierbare Eigenschaft des Materials ermöglicht, dass die an der Leitung anliegenden Erhebungen entweder zusammengedrückt, wodurch sich die zusammengedrückten Erhebungen verbreitern, oder seitlich weggedrückt werden. Zusammen mit einem weiteren Brandschutzelement, bevorzugt ein erfindungsgemäßes Brandschutzelement, wobei auch ein Brandschutzelement in mit anderer Form, wie etwa eines Mauersteins, verwendet werden kann, wird hierdurch über die Länge der Leitung, die mit dem bzw. den Brandschutzelement(en) bedeckt ist, eine hinreichend rauchgasdichte Ummantelung der Leitung erreicht. Aufgrund der Elastizität des Materials des Brandschutzelements kann es auch einfach um eine Leitung gewickelt werden, wobei je nach Leitungsumfang bzw. bei einem Leitungsbündel je nach Bündelumfang eine entsprechende Länge des Brandschutzelements gewählt wird, so dass die Leitung bzw. das Leitungsbündel im Umfangsrichtung vollständig umschlossen wird. Durch die Nachgiebigkeit des Materials können weitere Brandschutzelemente, welche entweder die Form von Mauersteinen oder der erfindungsgemäßen Brandschutzelemente aufweisen, ohne Zuschnitt daran angefügt werden.

Zweckmäßig ist der flächige Formkörper quaderförmig, wobei wenigstens eine der Grundflächen des Quaders strukturiert ist. Bevorzugt hat das erfindungsgemäße Brandschutzelement die Form und die Ausmaße der üblichen und kommerziell erhältlichen Brandschutzmauersteine. Dabei kann das Brandschutzelement aus einem Formkörper oder zwei Formkörpern bestehen. So kann das Brandschutzelement einfach in die Abschottung einer Bauteilöffnung integriert werden, ohne dieses anpassen zu müssen. Es ist auch möglich, die Maße des erfindungsgemäßen Brandschutzelements so zu wählen, dass der mindestens eine Formkörper dieselbe Grundfläche wie ein Brandschutzstein aufweist, dessen Höhe aber so gewählt ist, dass zwei ineinandergreifende Formkörper, die zusammen ein Brandschutzelement ergeben, zusammen die Höhe eines Brandschutzsteins ergeben. Dadurch ist es möglich das erfindungsgemäße Brandschutzelement als Nachbelegungselement für weitere Leitungen, die etwa zu einem späteren Zeitpunkt verlegt werden, in ein Brandschutzschott zu integrieren. Durch die strukturierte Oberfläche können Leitungen einfach, ohne zu großen Widerstand durch ein derartiges Nachbelegungselement eingeschoben werden. Die Nachgiebigkeit sowie die Elastizität des Materials ermöglichen, dass beim nachträglichen Einführen einer Leitung die Erhebungen der Leitung ausweichen können, so dass die Einführung ohne großen Widerstand und ohne große Beschädigung des Brandschutzelements erfolgen kann. Für den Fall, dass beim Einführen der Leitung ein paar Erhebungen abgerissen werden, behindert dies nicht die Dichtungseigenschaften des Brandschutzelements, da die übrigen intakten Erhebungen eine hinreichende Rauchgas- und Feuerdichtigkeit sicherstellen. Darüber hinaus ermöglichen die übrigen Erhebungen ein Hängenbleiben der abgerissenen Erhebungen, was wiederum zu einer Abdichtung führt. An den Stellen, an denen die Erhebungen abgerissen wurden, ergeben sich im Allgemeinen ebene Bereiche. Die Elastizität des Materials führt nun dazu, dass sich die ebenen Bereiche in ihrer Form der Leitung oder dem Leitungsbündel anpassen können, so dass weiterhin eine Rauchgasdichtigkeit gewährleistet ist.

Ein weiterer Vorteil des erfindungsgemäßen Brandschutzelements liegt darin, dass die letzte Reihe der Abschottung einer Bauteilöffnung mit Brandschutzsteinen mit dem erfindungsgemäßen Brandschutzelement gesetzt werden kann, wobei eine Anpassung der Brandschutzelemente an die Oberflächenstruktur der Bauteilöffnung etwa durch Zuschneiden aufgrund der strukturierten Oberfläche des Brandschutzelements nicht mehr erforderlich ist. Die Erhebungen der Oberfläche des Brandschutzelements passen sich an die Struktur der Bauteilöffnungswand an und dichten die Bauteilöffnung gegen Rauchgase ab. Damit kann bei hinreichender Dichtigkeit auf das gegebenenfalls erforderliche zusätzliche Auffüllen bzw. Abdichten des Spaltes zwischen der letzten Steinreihe und der Wandung des Durchbruchs mit Brandschutzschaum oder einer anderen Dichtmasse verzichtet werden. Dies bedingt einen geringeren Arbeits- und Materialaufwand. Ein weiterer Vorteil ergibt sich durch die verringerte Reibung der strukturierten Oberfläche an der Bauteilöffnung. Durch den verringerten Widerstand verglichen mit einem Brandschutzelement, das eine ebene Oberfläche hat, lässt sich das erfindungsgemäße Brandschutzelement leichter in die Bauteilöffnung einschieben.

Das Brandschutzelement kann auch als Matte ausgebildet sein, so dass es leichter und bevorzugt in einem Stück um Leitungen gewickelt werden kann. Dies ist insbesondere dann vorteilhaft, wenn bei stark wärmeleitenden Leitungen, wie z.B. bei dicken Kupferkabeln mit dünnen Isolierungen oder nicht isolierten Metallrohren, eine zusätzliche Wärmeisolation erforderlich ist. Bevorzugt ist das Brandschutzelement breiter als die notwendige Isolierstrecke für die standardmäßigen Leitungen bzw. für Leitungen mit niedriger Temperaturleitung, so dass es diese überragt. Die notwendige Isolierstrecke, die Mindestisolierstrecke, ist dabei vom Leitungstyp (Material, Größe) und von dem erwünschten Feuerwiderstand bzw. der zu erzielenden Feuerwiderstandsklasse, wie F30, F60, F90, F120 oder F180, abhängig. In den meisten Fällen genügt jedoch ein beidseitiger Überstand von etwa 5 cm über die Mindestisolierstrecke hinaus.

Zweckmäßig wird die strukturierte Oberfläche des Formkörpers durch regelmäßig oder unregelmäßig angeordnete hervorstehende Elemente gebildet, wobei eine regelmäßige Anordnung bevorzugt ist. Besonders bevorzugt sind die hervorstehenden Elemente entlang von gedachten Linien auf der Grundfläche periodisch angeordnet.

Gemäß einer bevorzugten Ausführungsform der Erfindung weisen die hervorstehenden Elemente selbst unterschiedliche oder gleiche Geometrien und/oder Ausmaße auf. Hierdurch wird sichergestellt, dass mehrere Leitungen unterschiedlicher Größe ohne zusätzlichen Aufwand etwa durch Ausschneiden von Brandschutzsteinen nebeneinander verlegt werden können, ohne die Brandschutzfunktion der Abschottung zu beeinträchtigen.

Zweckmäßig hinsichtlich einer einfacheren Herstellung sind die ausgebildeten Erhebungen und Vertiefungen zueinander komplementär. Bei dem erfindungsgemäßen Brandschutzelement aus zwei Formkörpern, bei denen die strukturierten Oberflächen einander zugewandt sind, sind die strukturierten Oberflächen zueinander komplementär, d.h. die Erhebungen und die Vertiefungen greifen ineinander, wobei kleine Lücken verbleiben können. Damit wird eine besonders gute Abdichtung gegen den Durchtritt von Rauchgasen erreicht, selbst wenn die strukturierten Oberflächen nicht 100%-ig komplementär sind.

Die Form der Erhebungen und Vertiefungen der strukturierten Oberfläche des Formkörpers ist nicht beschränkt. Bevorzugt sind die hervorstehenden Elemente pyramiden-, kegel-, halbkugel- oder noppenförmig.

Herstellungsbedingt können die Erhebungen durch Stege miteinander verbunden sein. Dies kann, abhängig von der geplanten Verwendung der erfindungsgemäßen Brandschutzelemente, zur Stabilität beitragen, wie beispielsweise bei Verwendung als Brandschutzmauersteine oder als Matte. Insbesondere entspricht die Höhe der Stege maximal der halben Höhe der Erhebungen, so dass ein Ineinandergreifen zweier Brandschutzelemente, die so angeordnet sind, dass die strukturierten Oberflächen einander zugewandt sind, erleichtert wird.

Bevorzugt, insbesondere für die Verwendung der erfindungsgemäßen Brandschutzelemente als Umwickelung, ist jedoch ein Brandschutzelement, dessen Erhebungen nicht durch Stege verbunden sind. Dies hat einen direkten Einfluss auf die Flexibilität des Brandschutzelementes, wobei die Brandschutzelemente ohne die Stege deutlich flexibler sind.

Alternativ kann die strukturierte Oberfläche durch Erhebungen und Vertiefungen in Form von Rillen gebildet werden. Die strukturierte Oberfläche ist dabei in einer Richtung senkrecht zur entsprechenden Ebene des Brandschutzelements insbesondere wellen-, trapez- oder keilförmig. Dies bedeutet, dass die Erhebungen und die Vertiefungen zusammen die jeweilige Form ergeben. Im Folgenden wird hierfür der Ausdruck "Form der Rillen/Erhebungen" verwendet. In einer Richtung parallel zur entsprechenden Ebene des Brandschutzelements können die Rillen insbesondere geradlinig, wellen-, trapez- oder keilförmig verlaufen. Im Folgenden wird hierfür der Ausdruck "Verlauf der Rillen/Erhebungen" verwendet. Es sei darauf hingewiesen, dass die strukturierte Oberfläche nicht auf die hier beschriebenen Formen und Verläufe beschränkt ist, sondern jegliche andere Form und anderen Verlauf annehmen kann. Der Verlauf der Rillen bzw. Erhebungen relativ zu einer Seitenkante des Brandschutzelements ist ebenfalls nicht beschränkt. Sie können parallel zu einer Seitenkante aber auch in jedem Winkel zu der Seitenkante, d.h. schräg, verlaufen, wobei die Rillen bzw. die Erhebungen jeweils parallel zueinander angeordnet sind. Die Erhebungen können dabei alternierend oder unregelmäßig gleich oder unterschiedlich hoch sein.

Bei dieser alternativen Ausführungsform des erfindungsgemäßen Brandschutzelements kann das Brandschutzelement sowohl in Form eines Brandschutzsteines als auch in Form einer Brandschutzmatte vorliegen.

Bei grossflächigen Brandschutzelementen, etwa bei Brandschutzmatten, deren Rillen bzw. Erhebungen schräg verlaufen, kann es hinsichtlich der Rauchgasdichtigkeit von Vorteil sein, diese in Reihen anzuordnen, wobei eine Reihe aus parallel nebeneinander liegenden Rillen bzw. Erhebungen besteht und benachbarte Reihen leicht gegeneinander verschoben sind, so dass die Rillen bzw. Erhebungen unterbrochen sind. Dabei beschreiben die Reihen und dementsprechend auch die Rillen bzw. Erhebungen innerhalb der Ebene des Brandschutzelements einen Treppen- oder Zick-Zack-Kurs. Die Brandschutzmatte wird zweckmäßig so verwendet, dass die Leitung in der Rille zum Liegen kommt. Die Rillenform ermöglicht eine einfache Anpassung des Brandschutzelements an unterschiedliche Leitungsdurchmesser. Werden als Leitungen Kabel- oder Rohrbündel mit dem Brandschutzelement umwickelt, werden die außen liegenden Zwickel zwischen den Einzelelementen des Bündels durch andrücken des Brandschutzelements verschlossen, so dass über die Länge des Brandschutzschotts weitestgehend eine Rauchgasdichtigkeit gegeben ist.

Im Falle eines Brandschutzsteines wird dieser bevorzugt so in ein Brandschutzschott eingebaut, dass eine Leitung in der Rille zum liegen kommt. Bei Verwendung eines derartigen Brandschutzsteines als Abschlussreihe eines Brandschutzschotts wird dieser bevorzugt so eingebaut, dass die Rillen in Richtung des Durchbruchs verlaufen, da hierdurch das Einführen des Brandschutzsteines erleichtert wird. Ferner werden somit die Erhebungen weniger beschädigt. Bevorzugt, insbesondere hinsichtlich der Rauchgasdichtigkeit werden Brandschutzsteine mit schräg verlaufenden Rillen bzw. Erhebungen. Diese Brandschutzsteine werden zweckmäßig so in ein Brandschutzschott eingebaut, so dass die Rillen bzw. Erhebungen nicht in einer Linie sonder versetzt zueinander verlaufen. Die Brandschutzsteine können dabei versetzt oder direkt hintereinander (in Richtung des Durchbruchs) eingebaut werden, wobei im letzteren Fall der Brandschutzstein so gedreht wird, dass der Verlauf der Rillen bzw. Erhebungen benachbarter Brandschutzsteine eine Zick-Zack-Linie beschreibt. Das Setzen der nächsten Brandschutzsteinreihe erfolgt entsprechend.

Bevorzugt ist die Dichteinlage luftundurchlässig, so dass auch in einem Zustand, in dem die Dichteinlage nicht durch die hindurchgeführten Leitungen zusätzlich komprimiert wird, kein Rauchgas und somit auch kein Kaltrauch durch die Vorrichtung hindurchdringen kann. Die Luftundurchlässigkeit wird beispielsweise durch eine entsprechende Wahl des Materials zur Fertigung der Dichteinlage sichergestellt. Alternativ kann die Luftundurchlässigkeit der Dichteinlage beispielsweise durch eine geeignete Beschichtung oder durch eine geeignete Behautung der Oberfläche der Dichteinlage gewährleistet werden, welche die Elastizität des elastisch deformierbaren Materials der Dichteinlage weiterhin gewährleisten.

Infolge der strukturierten Oberfläche, insbesondere der Erhebungen und der Elastizität des Formkörpers des erfindungsgemäßen Brandschutzelements können Leitungen auch im eingebauten Zustand des Brandschutzelements in einem Brandschutzschott einfach installiert werden. Die Erhebungen der strukturierten Oberfläche verschliessen bis zur Belegung mit Leitungen das Brandschutzschott. Beim Durchführen einer Leitung weichen diese seitlich aus und schaffen den nötigen Freiraum für die Leitung. Der Formkörper legt sich an die hindurchgeführte Leitung an und gewährleistet auch im belegten Zustand die Abschottung gegenüber Rauchgas. Bei der Entfernung einer Leitung füllt der Formkörper den nicht mehr benötigten Freiraum aus, wobei sich die Erhebungen gegebenenfalls wieder ausrichten. Das Brandschutzelement ist mehrfach belegbar und für die Installation wird kein Verbrauchsmaterial benötigt. Des Weiteren treten bei einer nachträglichen Belegung oder Entfernung von Leitungen keine Verunreinigungen des umgebenden Raumes auf, was insbesondere bei Arbeiten in fertig ausgebauten Räumen vorteilhaft ist.

Weiter bevorzugt ist die Dichteinlage aus einem Schaum gefertigt. Beispielsweise wird der Schaum in eine Form aufgeschäumt, welche eine entsprechende Negativform der gewünschten strukturierten Oberfläche der Dichteinlage aufweist. Alternativ wird die Dichteinlage aus einem Block geschnitten. Vorteilhaft ist die Dichteinlage aus einem zumindest teilweise geschlossenzelligen Schaum gefertigt, wobei ein geschlossenzelliger Schaum bevorzugt ist, da der vollständig luftundurchlässig ist.

Der Formkörper des erfindungsgemäßen Brandschutzelements besteht bevorzugt aus einem schäumbaren Bindemittel, das das aschebildende und gegebenenfalls intumeszierende Stoffgemisch enthält. Das Bindemittel dient dabei als verbundbildender Träger für das aschebildende und gegebenenfalls intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das aschebildende und gegebenenfalls intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in dem erfindungsgemäßen Brandschutzelement eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Ihre hitze- und feuerhemmenden Eigenschaften ergeben sich im Brandfall dadurch, dass das Brandschutzelement außenseitig unter Bildung einer Ascheschicht abbrennt. Diese Ascheschicht sorgt dann für die thermische Isolation. Wichtig dabei ist jedoch, dass die Ascheschicht möglichst stabil ist, sodass sie nicht vom Rest des Brandschutzelements abfällt. Dies wird beispielsweise durch chemische Zusätze im Schaumstoff erreicht. Bei großen Brandschutzelementen bzw. bei großen zu verschließenden Durchführungen muss natürlich auch bei fortgeschrittenem Brandverlauf noch zum einen genügend mechanische Stabilität der Aschekruste selbst als auch eine genügend stabile Haftung der Aschekruste an dem noch unverbrannten Teil des Brandschutzelements erhalten bleiben.

Bei Brandschutzelementen, wie beispielsweise Brandschutzsteinen wird häufig beobachtet, dass bei fortgeschrittenem Abbrand des Brandschutzsteins die bereits gebildete Asche abfällt oder der noch nicht verbrannte Teil des Brandschutzsteins aus dem Schott herausfällt. Dies ist zum einen darauf zurückzuführen, dass die Matrix im Falle eines Brandes erweicht wodurch erst die Intumeszenz der Additive stattfinden kann. Allerdings schwächt die Zone der erweichten Matrix den Verbund mit der bereits gebildeten Aschekruste. Darüber hinaus kann die Intumeszenz dazu beitragen, dass der noch unverbrannte Teil des Brandschutzsteins aus der Abschottung hinaus geschoben wird. Insbesondere bei großen Deckenschotts kann dies problematisch werden.

Die Schwächung des Verbundes zwischen der Aschekruste und dem noch unverbrannten Teil des Brandschutzsteins kann bei dem in den USA vorgeschriebenen Hose-Stream-Test, bei dem nach dem Brand die Aschekruste einem starken Wasserstrahl standhalten muss, zum Problem werden.

In einer weiter bevorzugten Ausführungsform des erfindungsgemäßen Brandschutzelements ist der Formkörper daher mit einem Trägerelement versehen. Dies ist besonders dann von Vorteil, wenn, wie oben angesprochen, eine zusätzliche Isolierung erforderlich wird und das Brandschutzelement die notwendige Isolierstrecke und den Durchbruch überragt. Dabei verhindert das Trägerelement ein Herabfallen der Aschekruste im Brandfall und somit einen Verlust der Isolation. Darüber hinaus ist es nicht mehr erforderlich, die überstehenden Enden des Brandschutzelements durch unterstützende Maßnahmen von außen, etwa durch einen Rahmen, abzustützen, um so ein Herabfallen der isolierenden Aschekruste zu verhindern.

Das Trägerelement soll eine Struktur aufweisen, welche eine Verbindung zwischen der Aschekruste und dem noch unverbrannten Teil des Brandschutzelements über die Schmelzzone hinweg sicherstellt. Dies kann durch ein nebeneinander angeordnete Fasern oder Fäden, wie etwa einem Gelege oder Gewebe, erreicht werden. Bevorzugt hat das Trägerteil eine Gitterstruktur. Zweckmäßig ist das Trägerelement aus einem temperaturbeständigen Material, wobei temperaturbeständig bedeutet, dass die Materialien einen höheren Schmelzpunkt als das Bindemittel haben. Solche Materialen sind dem Fachmann hinlänglich bekannt und können Kohlenstoff, Keramik, Basalt, mineralische Fasern, Glasfasern, natürliche Fasern und Verbundwerkstoffe mit Kunststoff sein, wobei Glasfasern bevorzugt sind. Auch Lochbleche, Streckmetalle, Gewebe aus Metallen, wie Aluminium, die derart geschaffen sind, dass sie die flexiblen und elastischen Eigenschaften des Brandschutzelements nicht beeinträchtigen, können als Trägerelement verwendet werden. Bevorzugt werden solche Materialien als Trägerelement verwendet, die eine einfache Verarbeitung, wie etwa das Zuschneiden des Brandschutzelements mit einem Teppichmesser, zulassen. Bevorzugt wird das Trägerelement als Einlage verwendet, in dem es in dem Formkörper eingeschäumt wird. Die Position des Trägerelements ist nicht beschränkt, wobei bevorzugt das Trägerelement eine Außenseite bildet bzw. nahe einer Außenseite des Brandschutzelements zum Liegen kommt.

Die Herstellung des erfindungsgemäßen Brandschutzelements erfolgt bevorzugt durch Formschäumen nach den dem Fachmann bekannten und für die Herstellungen von geschäumten Formkörper üblichen Verfahren. Die strukturierte Oberfläche des Brandschutzelements kann abformend erzeugt werden. Damit kann die Oberfläche auf einfache Weise unterschiedlich strukturiert werden, so dass viele Geometrien denkbar und möglich sind. Alternativ ist es auch möglich, den Schaum nachträglich zu bearbeiten, d.h. nach dem Herstellen etwa eines Schaumblocks oder einer Schaummatte, diesen bzw. diese in die richtige Form und Größe zu bringen. Beispielsweise wird zunächst durch RIM (Reaction Injection Moulding) ein Schaumblock oder eine Schaummatte hergestellt, anschließend die (flächigen) Oberflächen mittels Noppenwalzen strukturiert und schließlich horizontal geschnitten. Hierdurch können Blöcke oder Matten mit einer strukturierten Oberfläche erhalten werden.

Das erfindungsgemässe Brandschutzelement kann insbesondere durch homogene Mischung, bevorzugt im festen Zustand ohne Lösungsmittel, des aschebildenden und gegebenenfalls intumeszierenden Stoffgemisch und dem verbundbildenden Träger und gegebenenfalls anschließendes Aufschäumen hergestellt werden.

Ein weiterer Gegenstand der Erfindung ist die Verwendung des eben beschriebenen Brandschutzelements als Einlage für eine Vorrichtung zur Aufnahme zumindest einer Leitung in einer Durchführung eines Bauteils.

Ein weiterer Gegenstand der Erfindung ist die Vorrichtung selbst und damit eine Vorrichtung zur Aufnahme zumindest einer Leitung in einer Durchführung eines Bauteils mit einem mantelförmigen Gehäuse, mit einer Dichteinlage und mit einem Aufnahmeraum für die zumindest eine Leitung, die dadurch gekennzeichnet ist, dass die Dichteinlage ein oben beschriebenes Brandschutzelement ist.

Zweckmäßig weist die Dichteinlage zumindest eine mit in die Axialprojektion des Aufnahmeraums hineinragende strukturierte Oberfläche auf.

Die Dichteinlage wird derart in dem Gehäuse vorgesehen, dass die strukturierte Oberfläche den abgeschotteten Aufnahmeraum für die Leitungen ausbildet. Die Erhebungen der strukturierten Oberfläche greifen im eingebauten Zustand der Dichteinlage vorteilhaft in die Vertiefungen, also die Räume zwischen den gegenüberliegenden Erhebungen der gegenüberliegenden Dichteinlage ein. Die Dichteinlage weist ein Volumen auf, das mindestens dem von dem mantelförmigen Gehäuse über den Abschnitt, in dem die Dichteinlage angeordnet wird, ausgebildeten Volumen entspricht.

Die Dichteinlage wird beispielsweise gefaltet in dem Gehäuse vorgesehen, wobei zumindest bereichsweise die Abschnitte der strukturierten Oberfläche einander zugewandt sind und der Aufnahmeraum für die zumindest eine Leitung zwischen den Faltungen ausgebildet ist. Die Leitungen sind zwischen den Faltungen der Dichteinlage hindurchführbar.

Beispielsweise weist die Dichteinlage eine mittlere Höhe auf, die zumindest der Hälfte der entsprechenden Innenabmessung des mantelförmigen Gehäuses entspricht. Somit wird das elastisch deformierbare Material im eingebauten Zustand auch ohne hindurchgeführte Leitungen ausreichend stark komprimiert und die Abschottung gegen Rauchgas in vorteilhafter Weise sichergestellt.

Die Dichteinlage erstreckt sich zumindest teilweise entlang des mantelförmigen Gehäuses. Weiter kann die Vorrichtung auch mehr als eine Dichteinlage, die beispielsweise in Durchführrichtung der Vorrichtung beabstandet zueinander angeordnet sind, im mantelförmigen Gehäuse aufweisen.

Infolge der strukturierten Oberfläche, insbesondere der Erhebungen der Dichteinlage und der Elastizität der Dichteinlage können Leitungen auch im eingebauten Zustand der Vorrichtung einfach installiert werden. Die Erhebungen der strukturierten Oberfläche verschliessen bis zur Belegung mit Leitungen den Aufnahmeraum. Beim Durchführen einer Leitung weichen diese seitlich aus und schaffen den nötigen Freiraum für die Leitung. Das elastisch deformierbare Material legt sich an die hindurchgeführte Leitung an und gewährleistet auch im belegten Zustand der Vorrichtung die Abschottung gegenüber Rauchgas. Bei der Entfernung einer Leitung füllt das elastisch deformierbare Material den nicht mehr benötigten Freiraum aus, wobei sich die Noppen gegebenenfalls wieder ausrichten. Die Vorrichtung ist mehrfach belegbar und für die Installation wird kein Verbrauchsmaterial benötigt. Des Weiteren treten bei einer nachträglichen Belegung oder Entfernung von Leitungen infolge der Vorrichtung keine Verunreinigungen des umgebenden Raumes auf, was insbesondere bei Arbeiten in fertig ausgebauten Räumen vorteilhaft ist.

Die Dichteinlage ist beispielsweise in dem Gehäuse festgelegt und wird gleichzeitig mit diesem in dem Bauteil angeordnet. Alternativ wird in einem ersten Montagevorgang nur das mantelförmige Gehäuse der Vorrichtung in dem Bauteil angeordnet und dann nachträglich die Dichteinlage in dem Gehäuse vorgesehen. Bei der alternativen Variante kann die zumindest eine Dichteinlage auch erst nach dem Hindurchführen von zumindest einer Leitung durch das Gehäuse in diesem angeordnet werden.

Die Dichteinlage kann zusätzlich zumindest einen Mantelabschnitt aufweisen, der das elastisch deformierbare Material der Dichteinlage vorteilhaft aussenseitig zumindest bereichsweise umgreift. Besonders vorteilhaft sind zwei Mantelabschnitte vorgesehen, die beispielsweise über zumindest eine gelenkige Verbindung miteinander verbunden sind. Die Dichteinlage ist an dem zumindest einen Mantelabschnitt, beispielsweise mittels einer Klebeverbindung, festgelegt. Eine derartige Dichtungseinlage wird z. B. bei bereits durch das mantelförmige Gehäuse hindurchgeführten Leitungen vorgesehen und durch Verschieben in dem Gehäuse angeordnet. Ist das mantelförmige Gehäuse eine rohrförmige Hülse, sind die Mantelabschnitte der Dichteinlage vorteilhaft als Halbschalen ausgeformt. Weist die Dichteinlage zwei Dichtelemente auf, so ist vorteilhaft an jedem Mantelabschnitt jeweils ein Dichtelement vorgesehen, deren mit Erhebungen versehenen Oberflächen im zusammengeführten Zustand der Dichteinlage einander zugewandt sind, wobei zwischen diesen der Aufnahmeraum für die zumindest ein Leitung ausgebildet ist.

Vorteilhaft ist das mantelförmige Gehäuse eine rohrförmige Hülse und die mittlere Höhe der Dichteinlage entspricht zumindest dem halben Innendurchmesser der rohrförmigen Hülse. Durch die hülsenförmigen Ausgestaltung des Gehäuses und der Höhe der zumindest einen Dichteinlage wird die zumindest eine Dichteinlage in dem im Gehäuse angeordneten Zustand im Wesentlichen gleichmässig komprimiert, wodurch die Rauchgasdichtigkeit vorteilhaft sichergestellt ist.

In einer weiteren vorteilhaften Ausführungsform der Vorrichtung weist die Dichteinlage zumindest zwei Dichtelemente auf, die jeweils eine strukturierte Oberfläche aufweisen. Vorteilhaft werden die beiden Dichtelemente derart in dem Gehäuse angeordnet, dass im zusammengeführten Zustand der Dichtelemente deren strukturierten Oberflächen einander zugewandt sind.

Vorzugsweise sind die Erhebungen der strukturierten Oberfläche entlang von Linien des mantelförmigen Gehäuses periodisch angeordnet und bilden vorteilhaft eine zweidimensional strukturierte Oberfläche der Dichteinlage aus. Besonders vorteilhaft ist die gesamte, den Aufnahmeraum umgebende Oberfläche der Dichteinlage strukturiert, wobei insbesondere die Erhebungen der strukturierten Oberfläche alle im gleichen Abstand zueinander angeordnet sind. Entlang einer durch mehrere hintereinander liegende Erhebungen verlaufenden Linie, weist die Oberfläche beispielsweise eine wellenartige Ausgestaltung auf, wobei die Wellenberge jeweils die Erhebungen ausbilden.

Bevorzugt sind bezogen auf den Aufnahmeraum gegenüberliegende Erhebungen komplementär ausgebildet. Damit wird eine labyrinthartige Abdichtung geschaffen, die eine vorteilhafte Abschottung der Vorrichtung gegenüber Rauchgas gewährleistet. Besonders vorteilhaft sind benachbarte Erhebungen versetzt zueinander angeordnet.

Die Erfindung wird nachstehend anhand von Ausführungsbeispielen näher erläutert. Es zeigen:
- Fig. 1: eine schematische Darstellung einer Brandschutzmatte nach einer Ausführungsform;
- Fig. 2: eine schematische Seitenansicht der Brandschutzmatte aus Fig. 1;
- Fig. 3: eine schematische Draufsicht der Brandschutzmatte aus Fig. 1;
- Fig. 4: eine Ansicht auf eine erste erfindungsgemässe Vorrichtung;
- Fig. 5: einen Schnitt durch eine zweite in einem Bauteil angeordnete, erfindungsgemässe Vorrichtung und
- Fig. 6: eine Dichteinlage der zweiten erfindungsgemässen Vorrichtung im offenen Zustand im Grundriss.

Grundsätzlich sind in den Figuren gleiche Teile mit den gleichen Bezugszeichen versehen.

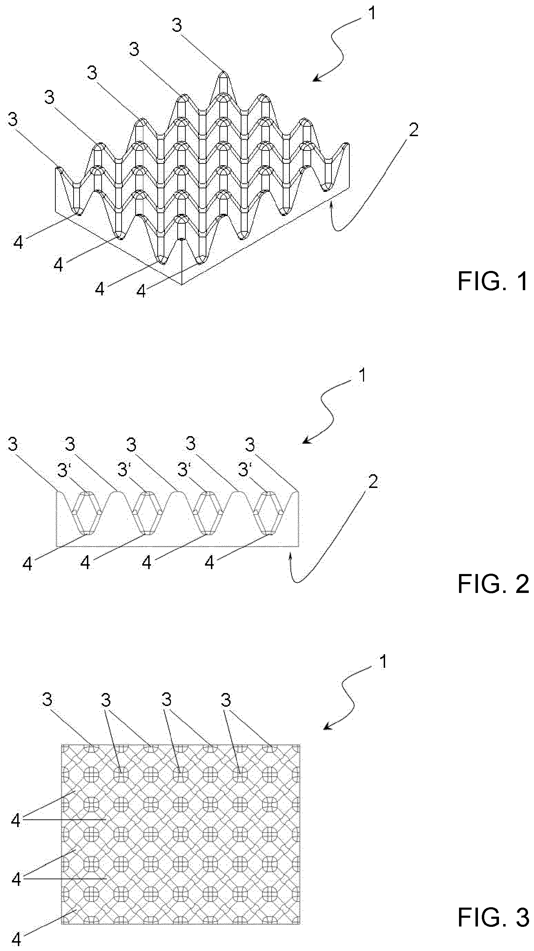

Figur 1 zeigt ein erfindungsgemäßes Brandschutzelement 1 in Form eines Brandschutzmauersteins, dessen Unterseite 2 glatt und dessen Oberfläche strukturiert ist, wobei die Erhebungen 3 und die Vertiefungen 4 in Form von Noppen ausgebildet sind. Figur 2 ist eine seitliche Ansicht des Brandschutzmauersteins aus Figur 1, welche eine regelmäßige Strukturierung der Oberfläche mittels Erhebungen 3 und 3' und Vertiefungen 4 in Form von Noppen zeigt, wobei ersichtlich wird, dass die Erhebungen der zweiten Reihe 3' gegenüber den Erhebungen der ersten Reihe 3 versetzt angeordnet sind, so dass sie von der Seite aus gesehen in einer Linie mit den Vertiefungen 4 der ersten Reihe liegen. Aus der Draufsicht aus Figur 3 auf den Brandschutzmauerstein 1 aus Figur 1 ist deutlich zu erkennen, dass die Erhebungen 3 und die Vertiefungen 4 regelmäßig angeordnet sind.

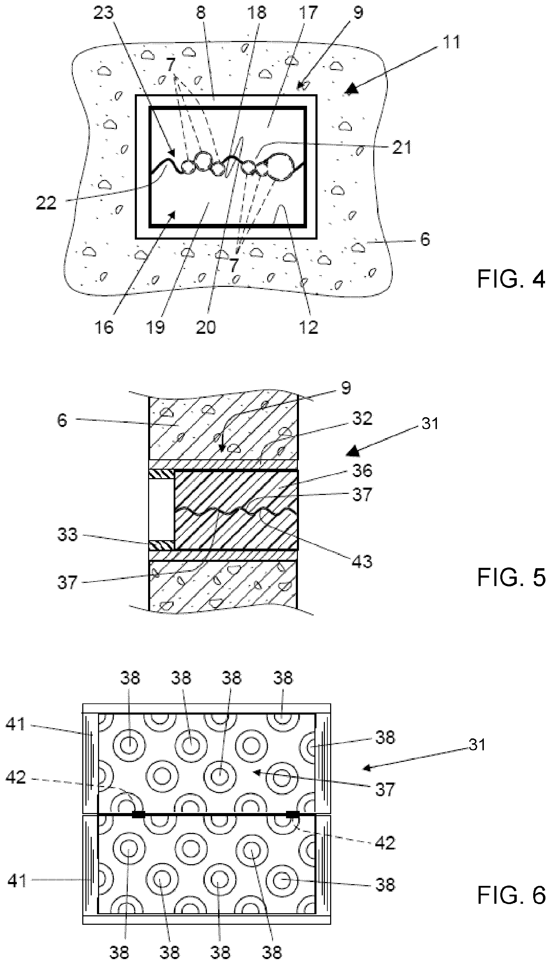

Die in der Figur 4 dargestellte Vorrichtung 11 zur Aufnahme von Leitungen unterschiedlichen Durchmessers als Leitungen 7 in einer Durchführung 9 einer Wand als Bauteil 6 weist ein mantelförmiges Gehäuse 12, eine Dichteinlage 16 aus einem elastisch deformierbaren Material und einen Aufnahmeraum 23 für die Leitungen 7 auf. Die Dichteinlage 16 weist zwei Dichtelemente 17 und 19 auf, die jeweils eine mit in die Axialprojektion des Aufnahmeraums 23 hineinragenden Noppen 21 bzw. 22 versehene Oberfläche 18 und 20 aufweisen. Die Noppen 21 bzw. 22 sind entlang von Linien in Querrichtung des mantelförmigen Gehäuses 12 periodisch angeordnet. Bezogen auf den Aufnahmeraum 23 sind gegenüberliegende Noppen 21 bzw. 22 komplementär ausgebildet. Die Dichteinlage 16 füllt im eingebauten Zustand das Querschnittsvolumen des mantelförmigen Gehäuses 12 vollständig aus, womit der Aufnahmeraum 23 im eingebauten Zustand der Dichteinlage 16 rauchgasdicht abgeschottet ist. Die Dichteinlage 16 ist luftundurchlässig und aus einem Elastomerschaum, wie beispielsweise Polyurethan, gefertigt. Aussenseitig ist an dem Bauteil 6 ein Brandschutzrahmen 8 mit einer intumeszierenden Einlage vorgesehen, welche beim Erreichen eines bestimmten Temperaturniveaus die Vorrichtung 11 vollständig verschliesst.

Aufgrund der elastischen Deformierbarkeit der Dichteinlage 16 und der Noppen 21 und 22 kann die Vorrichtung 11 nachträglich mit weiteren Leitungen 7 belegt werden. Zudem lassen sich durch die Vorrichtung 11 hindurchgeführte Leitungen 7 einfach entfernen, wobei die Dichteinlage 16 sich in diesem Bereich ausdehnt und den von der entfernten Leitung 7 geschaffenen Freiraum wieder rauchgasdicht abschottet.

Die in den Figuren 5 und 6 dargestellte Vorrichtung 31 weist eine rohrförmige Hülse als mantelförmiges Gehäuse 32 auf. Die Dichteinlage 36 umfasst zwei, als Halbschalen ausgebildete Mantelabschnitte 41, welche die Dichteinlage 36 aussenseitig bereichsweise umfassen und die über Gelenke 42 miteinander verbunden sind. Die Noppen 38 sind entlang von Linien in Längs- und Querrichtung des mantelförmigen Gehäuses 32 periodisch und versetzt zueinander angeordnet. Bezogen auf den Aufnahmeraum 23 sind gegenüberliegende Noppen 21 bzw. 22 komplementär ausgebildet. Im zusammengeführten Zustand ragen die Noppen 38 in die Axialprojektion des Aufnahmeraums 43 und verschliessen diesen rauchgasdicht. Die Dichteinlage 36 ist luftundurchlässig und aus einem teilweise geschlossenzelligen Schaum gefertigt. Weiter ist im Gehäuse 32 eine Brandschutzeinlage 33 vorgesehen, welche beim Erreichen eines bestimmten Temperaturniveaus die Vorrichtung 31 vollständig verschliesst.

Das rohrförmige Gehäuse 32 wird beispielsweise in einem ersten Schritt in der Betonwand vor dem Ausgiessen in der Schalung angeordnet. Anschliessend werden die Leitungen durch das Gehäuse 32 hindurchgeführt. Die Dichteinlage 36 wird dann ausserhalb des Bauteils 6 derart um die Leitungen gelegt, dass die mit Noppen 38 versehene Oberfläche 37 der Dichteinlage 36 diese umfassen und der Aufnahmeraum 43 für die Leitungen ausgebildet ist. Anschliessend lässt sich die Dichteinlage 36 verschieben, bis diese im Gehäuse 32 zu liegen kommt. Aufgrund des Verhältnisses des Innendurchmessers des rohrförmigen Gehäuses 32 zu dem Gesamtvolumen der Dichteinlage 36 wird die Vorrichtung 31 rauchgasdicht abgeschottet. Das Gehäuse 32 hält die Dichteinlage 36 über die Mantelabschnitte 41 in Position, so dass Leitungen nachträglich entfernbar und hindurchführbar sind.

## Patentansprüche

1. Brandschutzelement für eine rauchgas- und feuerdichte Abschottung von Leitungsdurchführungen mit mindestens einem flächigen Formkörper aus einem elastisch deformierbaren Material, das zumindest teilweise aus einem aschebildenden und gegebenenfalls intumeszierenden Stoffgemisch besteht,
wobei wenigstens eine Oberfläche des Formkörpers strukturiert ist,
wobei die Oberfläche mit Erhebungen und Vertiefungen versehen ist, und
wobei das Brandschutzelement zwei flächige Formkörper umfasst deren Oberflächen einander zugewandt sind, **dadurch gekennzeichnet,**
**dass** die strukturierten Oberflächen der beiden flächigen Formkörper zueinander komplementär sind.

2. Brandschutzelement nach Anspruch 1, **dadurch gekennzeichnet, dass** der flächige Formkörper quaderförmig ist, wobei wenigstens eine der Grundflächen des Quaders strukturiert ist.

3. Brandschutzelement nach Anspruch 1 oder 2, **dadurch gekennzeichnet, dass** die strukturierte Oberfläche durch regelmäßig oder unregelmäßig angeordnete hervorstehende Elemente gebildet wird.

4. Brandschutzelement nach Anspruch 3, **dadurch gekennzeichnet, dass** die hervorstehenden Elemente selbst unterschiedliche oder gleiche Geometrien und/oder Ausmaße aufweisen.

5. Brandschutzelement nach Anspruch 4, **dadurch gekennzeichnet, dass** die hervorstehenden Elemente pyramiden-, kegel-, halbkugel- oder noppenförmig sind.

6. Brandschutzelement nach Anspruch 5, **dadurch gekennzeichnet, dass** die hervorstehenden Elemente entlang von Linien der Grundfläche periodisch angeordnet sind.

7. Brandschutzelement nach Anspruch 1 oder 2, **dadurch gekennzeichnet, dass** die strukturierte Oberfläche durch Erhebungen und Vertiefungen gebildet wird, die Rillen ergeben.

8. Brandschutzelement nach Anspruch 7, **dadurch gekennzeichnet, dass** die Rillen in Richtung der Dicke des Brandschutzelements wellen-, trapez- oder keilförmig sind.

9. Brandschutzelement nach Anspruch 7 oder 8, **dadurch gekennzeichnet, dass** die Rillen in Richtung der Ebene des Brandschutzelements geradlinig, wellen-, trapez- oder keilförmig sind.

10. Brandschutzelement nach einem der Ansprüche 7 bis 9, **dadurch gekennzeichnet, dass** die Erhebungen gleich oder unterschiedlich hoch sind.

11. Brandschutzelement nach Anspruch 10, **dadurch gekennzeichnet, dass** die Höhe der Erhebungen alternierend oder unregelmäßig unterschiedlich ist.

12. Brandschutzelement nach einem der vorhergehenden Ansprüche, **dadurch gekennzeichnet, dass** der Formkörper aus einem schäumbaren Bindemittel, das das aschebildende und gegebenenfalls intumeszierende Stoffgemisch enthält, besteht.

13. Brandschutzelement nach einem der vorhergehenden Ansprüche, **dadurch gekennzeichnet, dass** der Formkörper mit einem Trägerelement versehen ist.

14. Verwendung eines Brandschutzelements nach einem der Ansprüche 1 bis 13 als Einlage für eine Vorrichtung zur Aufnahme zumindest einer Leitung in einer Durchführung eines Bauteils.

15. Vorrichtung zur Aufnahme zumindest einer Leitung in einer Durchführung eines Bauteils mit einem mantelförmigen Gehäuse, mit einer Dichteinlage und mit einem Aufnahmeraum für die zumindest eine Leitung, **dadurch gekennzeichnet, dass** die Dichteinlage ein Brandschutzelement nach einem der Ansprüche 1 bis 13 ist.

16. Vorrichtung nach Anspruch 15, **dadurch gekennzeichnet, dass** die Dichteinlage zumindest eine mit in die Axialprojektion des Aufnahmeraums hineinragende strukturierte Oberfläche aufweist.

17. Vorrichtung nach Anspruch 15 oder 16, **dadurch gekennzeichnet, dass** bezogen auf den Aufnahmeraum die durch die hervorstehenden Elemente ausgebildeten Erhebungen und Vertiefungen zueinander komplementär sind.

18. Vorrichtung nach einem der Ansprüche 15 bis 17, **dadurch gekennzeichnet, dass** die Dichteinlage luftundurchlässig ist.

## Claims

1. Fire protection element for smoke-proof and fireproof shielding of ducts for conduits, comprising at least one laminar moulding made of elastically deformable material which consists at least partially of an ash-forming and optionally intumescent mixture of substances,
wherein at least one surface of the moulding is structured,
wherein the surface is provided with protuberances and recesses, and
wherein the fire protection element includes two laminar mouldings the surfaces of which face towards one another,
**characterised in that**
the structured surfaces of the two laminar mouldings are complementary to one another.

2. Fire protection element according to Claim 1, **characterised in that** the laminar moulding is cuboidal, at least one of the main surfaces of the cuboid being structured.

3. Fire protection element according to Claim 1 or 2, **characterised in that** the structured surface is formed by regularly or irregularly arranged projecting elements.

4. Fire protection element according to Claim 3, **characterised in that** the projecting elements themselves have different or identical geometries and/or dimensions.

5. Fire protection element according to Claim 4, **characterised in that** the projecting elements are pyramidal, conical, hemispherical or nub-shaped.

6. Fire protection element according to Claim 5, **characterised in that** the projecting elements are arranged periodically along lines of the main surface.

7. Fire protection element according to Claim 1 or 2, **characterised in that** the structured surface is formed by protuberances and recesses which produce grooves.

8. Fire protection element according to Claim 7, **characterised in that** the grooves are undulating, trapezoidal or cuneiform in the direction of the thickness of the fire protection element.

9. Fire protection element according to Claim 7 or 8, **characterised in that** the grooves are rectilinear, undulating, trapezoidal or cuneiform in the direction of the plane of the fire protection element.

10. Fire protection element according to any one of Claims 7 to 9, **characterised in that** the protuberances are of equal or unequal height.

11. Fire protection element according to Claim 10, **characterised in that** the height of the protuberances differs alternatingly or irregularly.

12. Fire protection element according to any one of the preceding claims, **characterised in that** the mouldings are made of an expandable bonding agent which contains the ash-forming and optionally intumescent mixture of substances.

13. Fire protection element according to any one of the preceding claims, **characterised in that** the moulding is provided with a support element.

14. Use of a fire protection element according to any one of Claims 1 to 13 as a lining for a device for receiving at least one conduit in a duct of a building component.

15. Device for receiving at least one conduit in a duct of a building component having a jacket-like housing, with a sealing lining and with a receiving space for the at least one conduit, **characterised in that** the sealing lining is a fire protection element according to any one of Claims 1 to 13.

16. Device according to Claim 15, **characterised in that** the sealing lining has at least one structured surface projecting in the axial projection of the receiving space.

17. Device according to Claim 15 or 16, **characterised in that,** in relation to the receiving space, the protuberances and recesses formed by the projecting elements are complementary to one another.

18. Device according to any one of Claims 15 to 17, **characterised in that** the sealing lining is impermeable to air.

## Revendications

1. Elément pare-feu destiné à cloisonner des passages de conduites de manière étanche aux gaz de fumée et résistante au feu, comportant au moins un corps moulé plat constitué d'un matériau élastiquement déformable, qui est au moins en partie constitué d'un mélange de matières formant des cendres et éventuellement intumescent,
dans lequel au moins une surface du corps moulé est structurée,
dans lequel la surface est pourvue de saillies et de creux, et
dans lequel l'élément pare-feu comporte deux corps moulés plats dont les surfaces sont dirigées l'une vers l'autre, **caractérisé en ce que**
les surfaces structurées des deux corps moulés plats sont complémentaires l'une de l'autre.

2. Elément pare-feu selon la revendication 1, **caractérisé en ce que** le corps moulé plat est de forme parallélépipédique, dans lequel au moins une des surfaces de base du parallélépipède est structurée.

3. Elément pare-feu selon la revendication 1 ou 2, **caractérisé en ce que** la surface structurée est formée par des éléments saillants agencés de manière régulière ou irrégulière.

4. Elément pare-feu selon la revendication 3, **caractérisé en ce que** les éléments saillants ont eux-mêmes des géométries et/ou des dimensions différentes ou identiques.

5. Elément pare-feu selon la revendication 4, **caractérisé en ce que** les éléments saillants sont en forme de pyramide, de sphère, de demi-sphère ou de bouton.

6. Elément pare-feu selon la revendication 5, **caractérisé en ce que** les éléments saillants sont agencés périodiquement le long de lignes de la surface de base.

7. Elément pare-feu selon la revendication 1 ou 2, **caractérisé en ce que** la surface structurée est formée par des saillies et des évidements qui produisent des gorges.

8. Elément pare-feu selon la revendication 7, **caractérisé en ce que** les gorges sont de forme ondulée, trapézoïdale ou de coin dans la direction de l'épaisseur de l'élément pare-feu.

9. Elément pare-feu selon la revendication 7 ou 8, **caractérisé en ce que** les gorges sont de forme rectiligne, ondulée, trapézoïdale ou de coin dans la direction du plan de l'élément pare-feu.

10. Elément pare-feu selon l'une des revendications 7 à 9, **caractérisé en ce que** les saillies sont de hauteur identique ou différente.

11. Elément pare-feu selon la revendication 10, **caractérisé en ce que** la hauteur des saillies diffère de manière alternée ou irrégulière.

12. Elément pare-feu selon l'une des revendications précédentes, **caractérisé en ce que** le corps moulé est constitué d'un liant pouvant être amené à l'état de mousse, contenant le mélange de matières formant des cendres et éventuellement intumescent.

13. Elément pare-feu selon l'une des revendications précédentes, **caractérisé en ce que** le corps moulé est pourvu d'un élément de support.

14. Utilisation d'un élément pare-feu selon l'une des revendications 1 à 13 comme un insert pour un dispositif destiné à recevoir au moins une conduite dans un passage d'un composant.

15. Dispositif pour recevoir au moins une conduite dans un passage d'un composant, comportant un boîtier en forme d'enveloppe, ayant un insert d'étanchéité et un espace de réception pour la au moins une conduite, **caractérisé en ce que** l'insert d'étanchéité est un élément pare-feu selon l'une des revendications 1 à 13.

16. Dispositif selon la revendication 15, **caractérisé en ce que** l'insert d'étanchéité comporte au moins une surface structurée faisant saillie vers l'intérieur dans la projection axiale de l'espace de réception.

17. Dispositif selon la revendication 15 ou 16, **caractérisé en ce que** les saillies et les évidements formés par les éléments en saillie par rapport à l'espace de réception sont complémentaires les uns des autres.

18. Dispositif selon l'une des revendications 15 à 17, **caractérisé en ce que** l'insert d'étanchéité est imperméable à l'air.
